# EUROPEAN PATENT SPECIFICATION

(11) **EP 4 002 046 B1**
(45) Date of publication and mention of the grant of the patent: **03.04.2024**
(21) Application number: 21205153.6
(22) Date of filing: 28.10.2021
(51) Int. Cl.: G05D 1/00

(54) **REMOTE OPERATION SYSTEM COMPRISING A ROBOT AND AN OPERATION TERMINAL**
FERNSTEUERUNGSSYSTEM MIT ROBOTER UND BEDIENKONSOLE
SYSTÈME DE TÉLÉOPÉRATION COMPRENANT UN ROBOT ET UN TERMINAL DE COMMANDE

(30) Priority: 13.11.2020 JP 2020189655
(43) Date of publication of application: 25.05.2022
(73) Proprietor: HONDA MOTOR CO., LTD., Minato-ku Tokyo 107-8556 (JP)
(72) Inventor: MUKAI, Hiroki, Wako-shi, Saitama, 351-0193 (JP); HONJI, Masaya, Wako-shi, Saitama, 351-0193 (JP); KOSHIISHI, Takeshi, Wako-shi, Saitama, 351-0193 (JP)
(74) Representative: Weickmann & Weickmann PartmbB

(56) References cited:
- EP-A1- 3 175 693
- US-A1- 2012 197 439
- US-A1- 2016 117 853
- US-B1- 10 564 638
- US-B2- 9 690 289

## Description

### BACKGROUND

### Technical Field

The present invention relates to a remote operation system, comprising a robot, and an operation terminal.

### Related Art

There has been conventionally proposed a system in which a user remotely operates a mobile robot including a camera using an operation terminal (see, for example, JP 2019-62293 A) .

According to the above system, an image captured by the camera of the mobile robot is transmitted to the operation terminal, and the user is able to operate the mobile robot while recognizing a surrounding image of a movement destination of the mobile robot displayed on the operation terminal.

US 9 690 289 B2 shows a remote operation system according to the preamble of claim 1. Similar systems are shown in EP 3 175 693 A1 and US 10 564 638 B1.

US 10 564 638 B1 and US 2012/197439 A1 show additionally a stop display mode corresponding to a situation in which the mobile robot is stopped and a surrounding target object recognition unit configured to recognize a surrounding target object that is a person present in the surroundings of the mobile robot.

US 2012/197439 A1 further shows selecting a robot behavior depending on the surrounding object and in the stop display mode, means to support communication with the surrounding object.

### SUMMARY

In the above-described remote operation system of the mobile robot, the user has to recognize the situation in which the mobile robot is located from the surrounding image of the mobile robot and perform an appropriate operation in accordance with the situation.

The present invention has been made in view of the above circumstances, and has an object to provide a remote operation system, a robot, and an operation terminal, which are capable of supporting a user's remote operation of the mobile robot in accordance with a surrounding situation of the mobile robot.

The invention provides a remote operation system according to claim 1.

The remote operation system of claim 1 includes: a mobile robot; and an operation terminal configured to communicate with the mobile robot with each other, the mobile robot including a camera configured to capture an image of surroundings of the mobile robot, and transmitting, to the operation terminal, monitor image information based on a captured image by the camera, the operation terminal including a terminal display unit, receiving the monitor image information, and displaying, on the terminal display unit, an operation screen including a monitor image based on the captured image, in which the remote operation system includes a screen display controller configured to display the operation screen on the terminal display unit, the operation screen including a first sub screen for displaying the monitor image and a second sub screen different from the first sub screen, and configured to change a display content of the second sub screen in accordance with a predetermined display mode.

According to these features of claim 1, in addition to the first sub screen for displaying the monitor image of the surroundings of the mobile robot, the second sub screen different from the first sub screen is displayed on the operation screen displayed on the terminal display unit, so that the remote operation of the mobile robot by the user in accordance with the surrounding situation of the mobile robot can be supported.

Further, a stop display mode corresponding to a situation in which the mobile robot is stopped is set as the display mode and the remote operation system further includes: a surrounding target object recognition unit configured to recognize a surrounding target object that is a person or another robot present in the surroundings of the mobile robot; and a communication target selection reception unit configured to receive a selection operation for the surrounding target object, and in the stop display mode, the screen display controller displays, on the second sub screen, an operation unit for supporting communication with the surrounding target object, selection of which has been received by the communication target selection reception unit.

According to these features of claim 1, it is possible to support communication between the user of the operation terminal and the surrounding target object (either a person or another robot) that has been selected by the user.

According to claim 1, the communication target selection reception unit receives the selection of the surrounding target object in response to the selection operation for an image part of the surrounding target object displayed on the first sub screen.

According to these features of claim 1, the user of the operation terminal is able to confirm the image of the surrounding target object and select the communication target.

According to claim 1, the screen display controller displays, on either the first sub screen or the second sub screen, an image obtained by enlarging the image part of the surrounding target object, the selection of which has been received by the communication target selection reception unit, and the remote operation system further includes a communication controller configured to enable the communication with only the surrounding target object, the selection of which has been received by the communication target selection reception unit.

According to these features of claim 1, one-to-one communication with a specific surrounding target object is enabled, while the confirmation of a communication partner is facilitated in an enlarged image.

According to the features of claim 2, the user of the operation terminal is able to select a communication target with reference to the list of persons or other robots present in the surroundings of the mobile robot.

According to the features of claim 3, by limiting the communication target to a surrounding target object registered beforehand or a surrounding target object located within a predetermined distance from the mobile robot, the user is able to easily select a communication partner.

According to the features of claim 4, when the mobile robot is in the moving process, the operation screen including the first sub screen for displaying the monitor image and the second sub screen that is another one for supporting the operation for the mobile robot in the moving process is displayed, so that the operation of the mobile robot by the user can be facilitated.

According to the features of claim 5, the operation screen including the first sub screen and the second sub screen for respectively displaying the image parts corresponding to the different image-capturing ranges is displayed on the terminal display unit, so that the user is able to easily recognize the surrounding situation of the mobile robot.

According to the features of claim 6, it is possible to facilitate the recognition of the user with respect to the obstacle present in the surroundings of the mobile robot.

According to the features of claim 7, by displaying the map of the movement area on the second sub screen, the user is able to easily recognize the movement destination of the mobile robot.

According to the features of claim 8, by displaying the area additional information on the second sub screen, the user is able to easily select a point to stop by in the moving process of the mobile robot.

According to the features of claim 9, the information on the specific location that has been selected by the user can be provided to the user by displaying the second sub screen.

According to the features of claim 10, at a timing when the mobile robot is moving in the registered area registered as the sightseeing area, the situation related to the location where the mobile robot is located can be provided to the user by displaying the second sub screen.

According to the features of claim 11, the area additional information can be provided to the user, only when the moving speed of the mobile robot is relatively low.

According to the features of claim 12, by displaying the navigation information on the second sub screen, the user is able to easily operate the mobile robot to the destination.

According to the features of claim 13, when the moving speed of the mobile robot is equal to or higher than the high-speed determination speed and it is assumed that the mobile robot is moving to the destination, the navigation information is displayed on the second sub screen to support the operation of the mobile robot by the user.

According to the features of claim 14, in a case where it is assumed that the mobile robot is moving and the user is unlikely to communicate with either a person or another robot present in the surroundings of the mobile robot, it is possible to prohibit the face image of the user from being displayed on the display unit of the robot or to switch to the display of the substitute icon.

According to the features of claim 15, the display mode of the operation terminal can be switched to a display mode that the user desires.

According to the features of claim 16, it is possible to switch the display mode in accordance with the environment in which the mobile robot is present in accordance with whether the mobile robot is present indoors or outdoors.

According to the features of claim 17, the display layout of the operation screen can be set to a layout in accordance with the user's desire.

According to the features of claim 18, it is possible to facilitate identification of an operable operation icon and an inoperable operation icon by the user.

According to the above remote operation system, by displaying, on the operation screen to be displayed on the terminal display unit, the first sub screen for displaying the monitor image of the surroundings of the mobile robot as well as the second sub screen that is different from the first sub screen, the remote operation for the mobile robot by the user can be supported in accordance with the surrounding situation of the mobile robot.

### BRIEF DESCRIPTION OF DRAWINGS

FIG. 1 is an explanatory diagram of a configuration of a remote operation system;
FIG. 2 is a configuration diagram of a mobile robot;
FIG. 3 is a configuration diagram of an operation terminal;
FIG. 4 is a flowchart of a switching process of an operation screen in accordance with a display mode;
FIG. 5 is a flowchart of a display process of the operation screen in a stop display mode;
FIG. 6 is a flowchart of a display process of the operation screen in a movement display mode;
FIG. 7 is an explanatory diagram of a display mode of the operation screen in a situation in which the mobile robot is present in a conference place;
FIG. 8 is an explanatory diagram of a display mode of the operation screen in a situation in which a new person is added to a conference place;
FIG. 9 is an explanatory diagram of another display mode of the operation screen in the situation in which the new person is added to the conference place;
FIG. 10 is an explanatory diagram of a display mode of the operation screen in a situation in which the mobile robot is moving indoors;
FIG. 11 is an explanatory diagram of a mode in which a part of a monitor image is enlarged and displayed;
FIG. 12 is an explanatory diagram of the operation screen in a situation in which the mobile robot is moving in a sightseeing spot;
FIG. 13 is an explanatory diagram of the operation screen in a situation in which the mobile robot is moving on an outdoor road; and
FIG. 14 is an explanatory diagram in a mode in which an imaging direction of a camera is controlled to a horizontal direction in a case where the mobile robot is moving on a slope.

### DETAILED DESCRIPTION

### [1. Configuration of Remote Operation System]

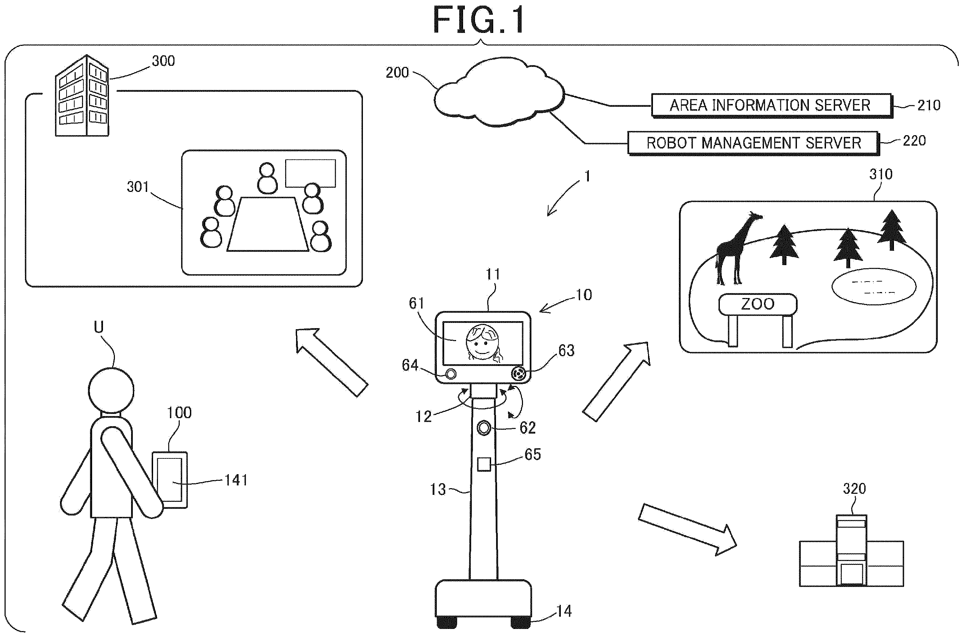

A remote operation system 1 in the present embodiment will be described with reference to FIG. 1. The remote operation system 1 includes a mobile robot 10 and an operation terminal 100, and the mobile robot 10 and the operation terminal 100 communicate with each other through a communication network 200. The mobile robot 10 includes a head unit 11, a neck unit 12, a body unit 13, and a traveling unit 14.

The head unit 11 is provided with a robot display unit 61, a robot speaker 63, and a robot microphone 64. The neck unit 12 causes the head unit 11 to perform a swing motion for swinging vertically and horizontally (a head-shaking motion) with respect to the body unit 13. The body unit 13 is provided with a robot camera 62 and a LiDAR 65. The robot camera 62 captures an image of surroundings of the mobile robot 10, and the LiDAR 65 detects a distance to an object present in the surroundings of the mobile robot 10 by laser irradiation. The LiDAR 65 corresponds to an object detection sensor.

An operation screen including a monitor image transmitted from the mobile robot 10 is displayed on a terminal display unit 141 (touch panel) of the operation terminal 100. A user U of the remote operation system 1 visually recognizes the monitor image of the surroundings of the mobile robot 10 displayed on the operation screen to recognize the situation of a movement destination of the mobile robot 10. Then, the user U remotely operates the mobile robot 10 on the operation terminal 100 in accordance with the situation of the mobile robot 10.

The mobile robot 10 is a so-called telepresence robot, and for example, moves inside a building 300 to participate in a conference at a conference place 301, or moves outdoors to a sightseeing spot 310 or a destination 320 such as a hotel. The robot display unit 61 of the mobile robot 10 displays a face image of the user U or an icon imitating the face of the user U. This configuration enables making people near the mobile robot 10 feel as if the user U itself were present at the movement destination of the mobile robot 10.

In addition, the user U visually recognizes the image of the surroundings of the mobile robot 10 displayed on the operation terminal 100, and can have a feeling as if the user U itself were present at the movement destination of the mobile robot 10. Furthermore, the user U is able to communicate with a person or another robot present at the movement destination of the mobile robot 10 over a video call or a chat on the operation terminal 100.

The mobile robot 10 acquires, through the communication network 200, information of the inside of a movement area of the mobile robot 10 from an area information server 210, and also acquires information of the mobile robot 10 or another robot from a robot management server 220.

### [2. Configuration of Mobile Robot]

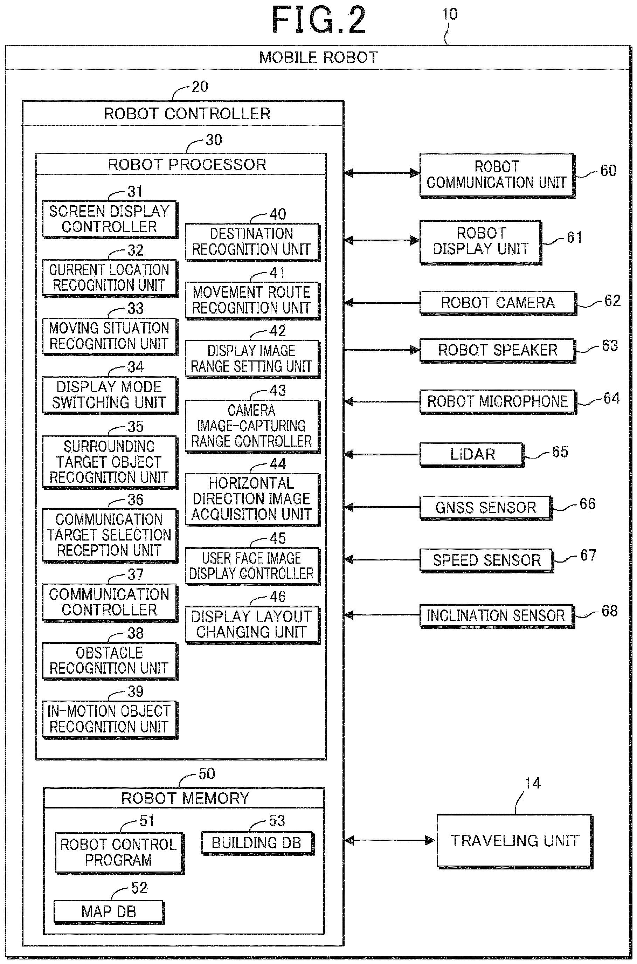

A configuration of the mobile robot 10 will be described with reference to FIG. 2. The mobile robot 10 includes, in addition to the above-described constituent elements, a robot communication unit 60, a robot controller 20, a global navigation satellite system (GNSS) sensor 66, a speed sensor 67, and an inclination sensor 68.

The robot communication unit 60 communicates with the operation terminal 100 through the communication network 200. Note that in a situation in which the distance between the mobile robot 10 and the operation terminal 100 is short, the robot communication unit 60 may directly communicate with the operation terminal 100. The GNSS sensor 66 receives radio waves from a GNSS satellite, and detects the current location of the mobile robot 10. The speed sensor 67 detects a moving speed (traveling speed) of the mobile robot 10. The inclination sensor 68 detects an inclination angle of the mobile robot 10 with respect to the horizontal direction.

The robot controller 20 is configured with a robot processor 30, a robot memory 50, an interface circuit, not illustrated, and the like. The robot memory 50 stores a robot control program 51, a map database (DB) 52, a building DB 53, and the like. A map of the movement area of the mobile robot 10 is recorded in the map DB 52. A floor layout and the like of a building present in the movement area of the mobile robot 10 is recorded in the building DB 53.

The map DB 52 and the building DB 53 may be downloaded from the area information server 210 to the mobile robot 10. The robot control program 51 may be downloaded from the robot management server 220 to the mobile robot 10.

The robot processor 30 reads and executes the robot control program 51 from the robot memory 50 so as to function as a screen display controller 31, a current location recognition unit 32, a moving situation recognition unit 33, a display mode switching unit 34, a surrounding target object recognition unit 35, a communication target selection reception unit 36, a communication controller 37, an obstacle recognition unit 38, an in-motion object recognition unit 39, a destination recognition unit 40, a movement route recognition unit 41, a display image range setting unit 42, a camera image-capturing range controller 43, a horizontal direction image acquisition unit 44, a user face image display controller 45, and a display layout change unit 46.

The screen display controller 31 changes data of the operation screen to be transmitted to the operation terminal 100 in accordance with a stop display mode corresponding to a case where the mobile robot 10 is in a stopped state and a movement display mode corresponding to a case where the mobile robot 10 is in a moving state (traveling state), so as to control the operation screen to be displayed on the terminal display unit 141 of the operation terminal 100. Details of the display mode on the operation screen in each display mode will be described later.

The current location recognition unit 32 recognizes the current location (latitude, longitude) of the mobile robot 10, based on a location detection signal output from the GNSS sensor 66. The moving situation recognition unit 33 recognizes the moving situation of the mobile robot 10, based on a change in the current location of the mobile robot 10 recognized by the current location recognition unit 32, a moving speed of the mobile robot 10 detected by the speed sensor 67, map data that has been acquired from the map DB 52, a building layout that has been acquired from the building DB 53, and the like. In a case where the mobile robot 10 is located indoors, the current location recognition unit 32 matches a detected situation of a surrounding object by the LiDAR 65 with indoor layout data that has been acquired from the building DB 53, and recognizes the current location of the mobile robot 10.

The display mode switching unit 34 switches the display mode of the operation screen on the display terminal 100 between the stop display mode and the movement display mode in response to a selection operation by the user U. The surrounding target object recognition unit 35 recognizes a person and another robot present in the surroundings of the mobile robot 10 each as a surrounding target object, based on the image captured by the robot camera 62, an object detection signal detected by the LiDAR 65, and a detected sound detected by the robot microphone 64. Note that the robot communication unit 60 may receive an identification signal transmitted from a transmitter carried by a person or another robot, and may recognize a person or another robot present in the surroundings of the mobile robot 10.

The communication target selection reception unit 36 receives a selection of a surrounding target object with whom the user U desires to communicate, in response to a selection operation on the operation screen by the user U. The communication controller 37 controls communication between the user U and the surrounding target object, the selection of which has been received by the communication target selection reception unit 36. The communication controller 37 enables a video call, a voice call, and a chat between the user U and the surrounding target object.

The obstacle recognition unit 38 recognizes an obstacle present in the surroundings of the mobile robot 10, based on the image captured by the robot camera 62 and the object detection signal detected by the LiDAR 65. The in-motion object recognition unit 39 recognizes an object in motion in the surroundings of the mobile robot 10, based on an image captured by the robot camera 62, an object detection signal detected by the LiDAR 65, and a detected sound detected by the robot microphone 64. The object in motion includes a person and another robot except for the mobile robot 10. Here, the "motion" includes an action of uttering a voice such as a speech, in addition to an action of moving its body.

The destination recognition unit 40 recognizes a movement destination of the mobile robot 10 that has been set by the user U. The user U operates the operation terminal 100, and sets the destination of the mobile robot 10. Here, the destination includes not only a final destination for which the mobile robot 10 is heading but also a stop point on its way to the final destination.

The movement route recognition unit 41 recognizes a movement route of the mobile robot 10, based on the current location of the mobile robot 10 that has been recognized by the current location recognition unit 32, the destination of the mobile robot 10 that has been recognized by the destination recognition unit 40, and the map data that has been acquired from the map DB 52. The display image range setting unit 42 sets a range of the monitor image to be displayed on the operation screen of the operation terminal 100 in response to an operation by the user U.

The camera image-capturing range controller 43 moves the mobile robot 10 so that all persons and other robots present in the surroundings of the mobile robot 10 are included in an image-capturing range of the robot camera 62. Note that, in a case where the robot camera 62 is configured to be switchable between a wide angle and a telescope, the robot camera 62 may be switched to the wide angle so that all persons and other robots present in the surroundings of the mobile robot 10 can be included in the image-capturing range of the robot camera 62.

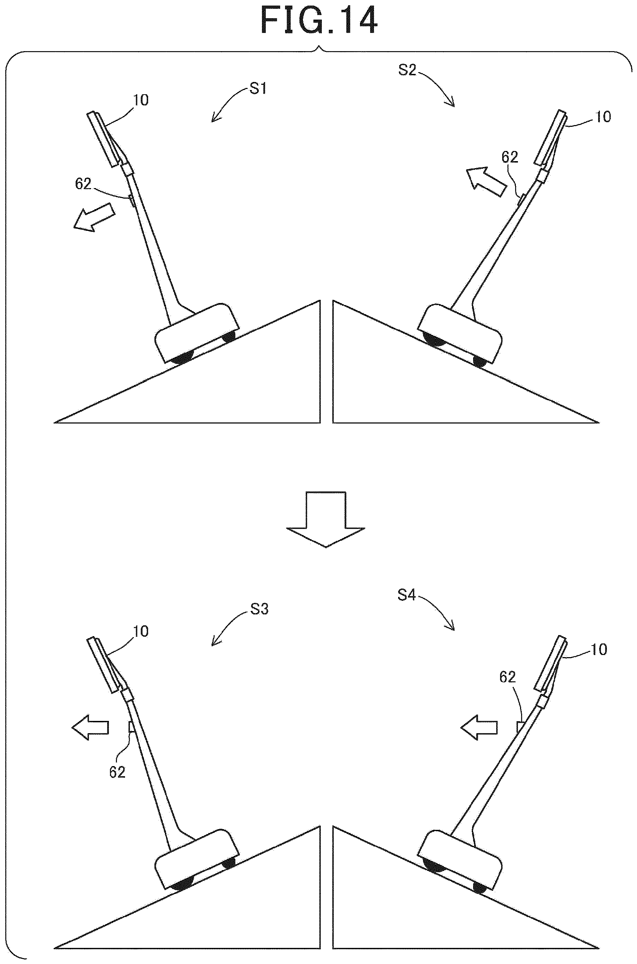

In a case where the robot camera 62 has a function of changing an imaging direction, in a situation in which the mobile robot 10 is located on a slope as illustrated in S1 and S2 of FIG. 14 and the robot camera 62 is facing either upward or downward with respect to the horizontal direction, the horizontal direction image acquisition unit 44 performs a process of causing the imaging direction of the robot camera 62 to be the horizontal direction as illustrated in S3 and S4. This process enables acquisition of a captured image in the traveling direction of the mobile robot 10. In addition, in a case where the robot camera 62 does not have the function of changing the imaging direction, the horizontal direction image acquisition unit 44 extracts an image in a range corresponding to the horizontal direction (a horizontal corresponding image) from an image facing either upward or downward that has been captured by the robot camera 62 in the situation of S1 and S2 so as to acquire a captured image in the traveling direction of the mobile robot 10.

The user face image display controller 45 controls whether to cause the robot display unit 61 to display the face image of the user U in response to an operation on the operation terminal 100 by the user U. The face image of the user U may be a real-time image captured by a terminal camera 142 and transmitted to the mobile robot 10, or may be an image stored beforehand in the robot memory 50 of the mobile robot 10. When the face image of the user U is not displayed on the robot display unit 61, the user face image display controller 45 displays an icon imitating the face of the user U on the robot display unit 61 in response to the operation of the user U, or displays neither the face image nor the icon imitating the face on the robot display unit 61. The display layout change unit 46 changes the layout of the operation screen to be displayed on the operation terminal 100 in response to the operation on the operation terminal 100 by the user U.

### [3. Configuration of Operation Terminal]

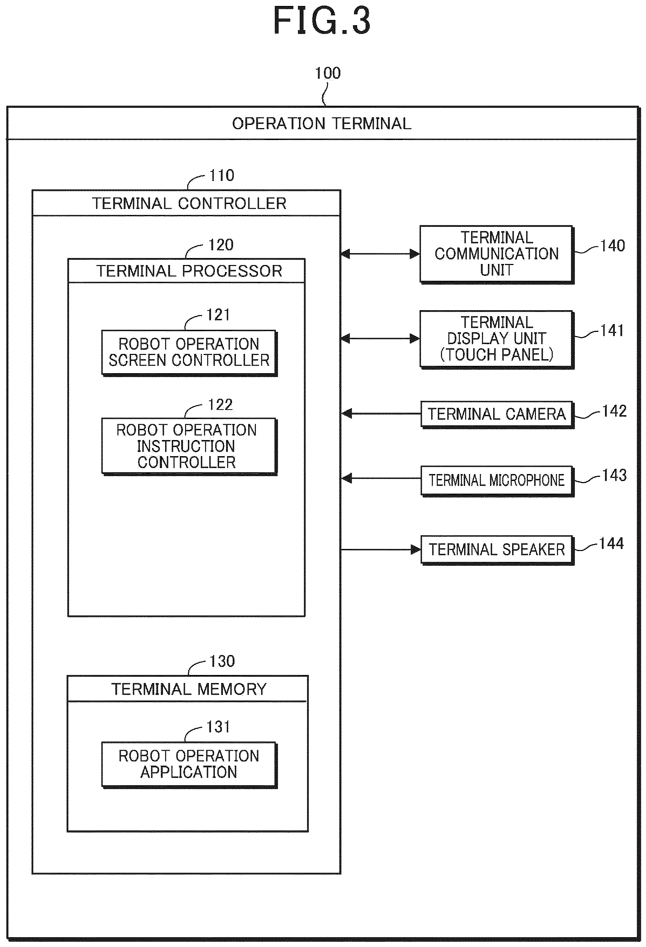

A configuration of the operation terminal 100 will be described with reference to FIG. 3. The operation terminal 100 includes a terminal controller 110, a terminal communication unit 140, a terminal display unit 141, the terminal camera 142, a terminal microphone 143, and a terminal speaker 144. The operation terminal 100 may be a dedicated terminal for operating the mobile robot 10, or may be a general-purpose communication terminal such as a smartphone or a tablet terminal.

The terminal communication unit 140 and the mobile robot 10 communicate with each other through the communication network 200 (see FIG. 1). The terminal display unit 141 is a touch panel, displays an operation screen corresponding to screen data output from the terminal controller 110, and outputs operation data corresponding to a touch operation of the user U to the terminal controller 110.

The terminal camera 142 captures a face image and the like of the user U, and outputs data of the captured image to the terminal controller 110. The terminal microphone 143 detects sound of voices or the like of the user U, and outputs sound data to the terminal controller 110. The terminal speaker 144 receives sound data output from the terminal controller 110, and outputs sound of voices or the like of a communication partner with whom a call is being made via the mobile robot 10.

A robot operation application program 131 for realizing the operation of the mobile robot 10 is stored in a terminal memory 130. A terminal processor 120 reads and executes the robot operation application program 131 so as to function as a robot operation screen controller 121 and a robot operation instruction controller 122.

The robot operation screen controller 121 receives data of the operation screen for the mobile robot 10 transmitted from the mobile robot 10 via the terminal communication unit 140, and displays the operation screen on the terminal display unit 141. The data of the operation screen includes monitor image information based on an image captured by the robot camera 62. The robot operation instruction controller 122 recognizes an instruction content of the operation by the user U from an operation signal corresponding to a touch operation on the operation screen output from the terminal display unit 141, and transmits operation data indicating the instruction content of the operation to the mobile robot 10 via the terminal communication unit 140.

### [4. Display Mode Switching Process]

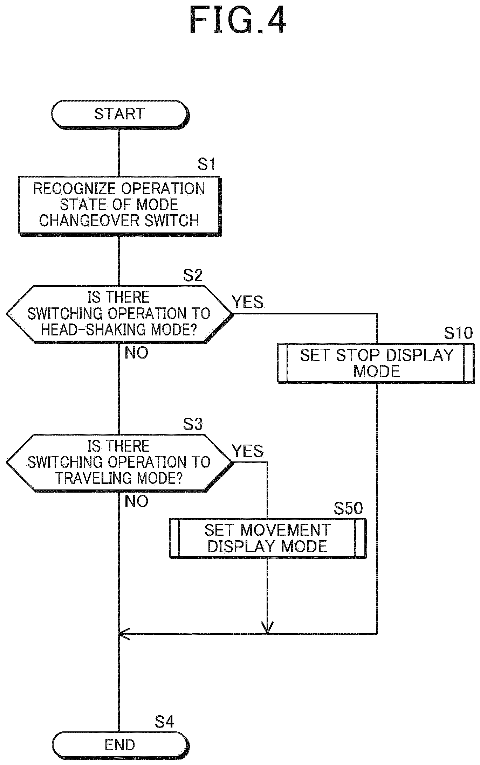

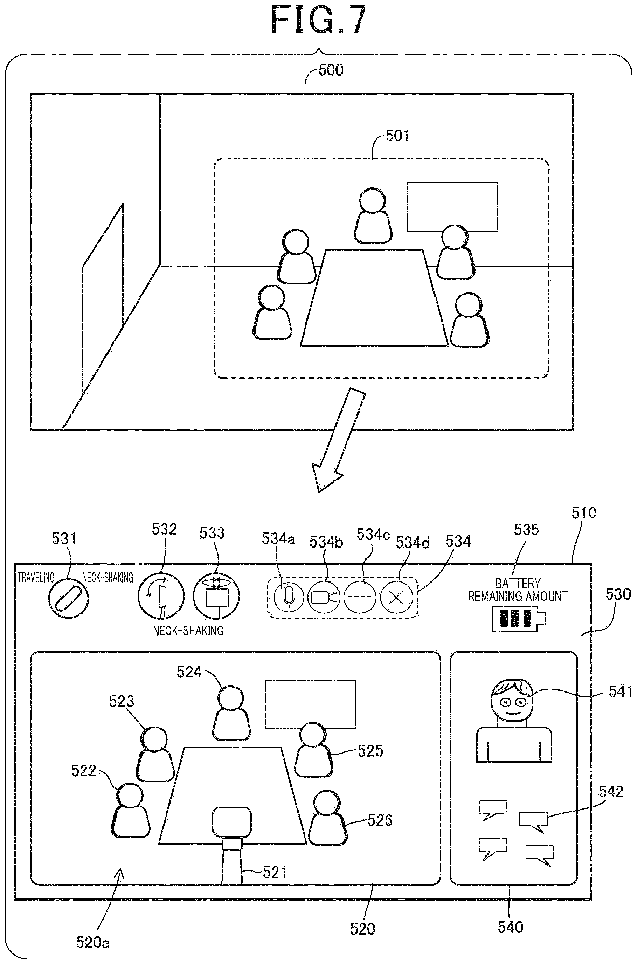

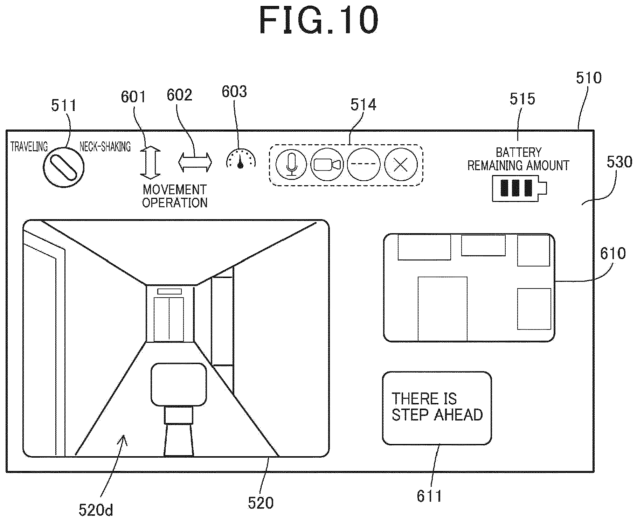

A description will be given with regard to a display mode switching process, performed by the mobile robot 10, on the operation screen of the terminal display unit 141 with reference to a flowchart illustrated in FIG. 4. The screen display controller 31 switches and controls the operation screen displayed on the operation terminal 100 between the operation screen in the stop display mode illustrated in FIGS. 7 to 9 and the display screen in the movement display mode illustrated in FIGS. 10 to 13.

Referring to FIG. 7, an operation screen 510 includes a first sub screen 520 for displaying a monitor image that has been extracted from a captured image 500 of the surroundings of the mobile robot 10 captured by the robot camera 62, and a second sub screen 530 for operating the mobile robot 10. In the present embodiment, the second sub screen 530 is an area except for the first sub screen 520 of the operation screen 510. A mode changeover switch 531 for switching the display mode is displayed on the second sub screen 530.

The operation screen 510 in FIG. 7 is an operation screen in the stop display mode corresponding to a case where the mobile robot 10 is in a stopped state, and thus a vertical shaking icon 532 for instructing the head unit 11 of the mobile robot 10 to shake vertically and a horizontal shaking icon 533 for instructing the head unit 11 to shake horizontally are displayed. Furthermore, communication icons 534 for conducting communication over a video call, a voice call, a chat, and the like, and a communication window 540 are displayed.

The communication icons 534 include a voice call icon 534a for starting a voice call, a video call icon 534b for starting a video call, an option icon 534c for starting a chat or the like, and a call end icon 534d for ending the call. On the communication window 540, an image 541 of the face of a communication partner, a message 542 in chatting, and the like are displayed.

In step S1 of FIG. 4, the display mode switching unit 34 recognizes an operation state of the mode changeover switch 531, based on the operation data transmitted from the operation terminal 100. Then, when the switching operation to a head-shaking mode is performed by the mode changeover switch 531, the display mode switching unit 34 advances the process to step S10 to set the stop display mode, and advances the process to step S4.

On the other hand, when the switching operation to the head-shaking mode is not performed, the display mode switching unit 34 advances the process to step S3 to determine whether the switching operation to a traveling mode on the mode changeover switch 531 has been performed. Then, when the switching operation to the traveling mode is performed, the display mode switching unit 34 advances the process to step S50. When the switching operation to the traveling mode is not performed, the display mode switching unit 34 advances the process to step S4. In step S4, the display mode switching unit 34 sets the display mode of the operation screen to the movement display mode.

### [5. Display of Operation Screen in Stop Display Mode]

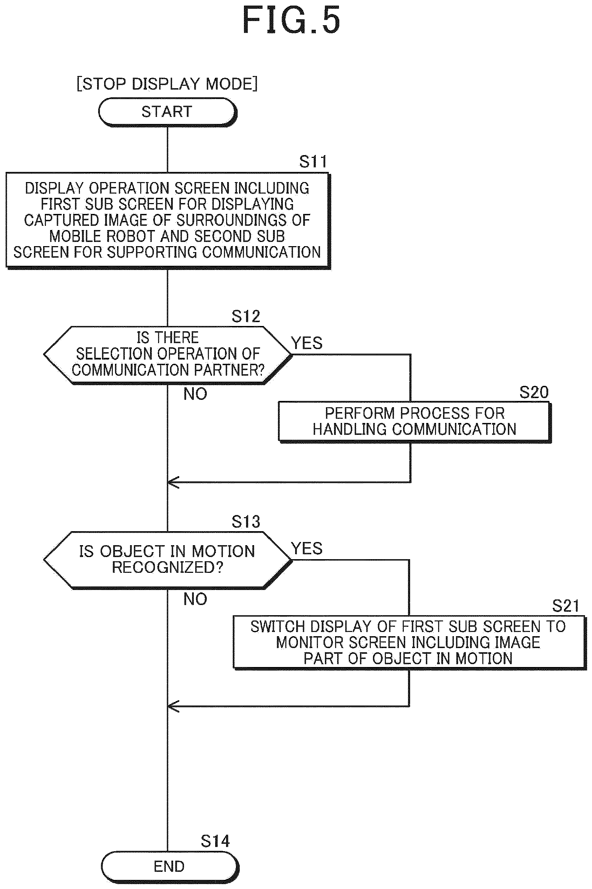

A description will be given with regard to display control of the operation screen in the stop display mode performed by the mobile robot 10 in accordance with the flowchart illustrated in FIG. 5, with reference to the operation screens illustrated in FIGS. 7 to 9.

In step S11 of FIG. 5, as illustrated in FIG. 7, the screen display controller 31 transmits, to the operation terminal 100, the screen data of the operation screen 510 in the stop display mode, and causes the operation screen 510 to be displayed on the terminal display unit 141 of the operation terminal 100. As described above, the operation screen 510 includes the first sub screen 520 for displaying the monitor image based on the image 500 captured by the robot camera 62, and the second sub screen 530 for displaying an operation unit for communication.

FIG. 7 illustrates the captured image 500 and the operation screen 510 in a situation in which the mobile robot 10 is present in a conference place, and the captured image 500 includes image parts of conference participants. In this case, the camera image-capturing range controller 43 moves the mobile robot 10 to adjust the image-capturing range of the robot camera 62 so as to include the image parts of all persons participating in the conference and another robot. Note that, in a case where the robot camera 62 is provided with a function of changing the imaging direction or switching between the wide angle and the standard of the lens, the camera image-capturing range controller 43 also uses these functions to adjust the image-capturing range of the robot camera 62.

The screen display controller 31 displays, on the first sub screen 520, a first monitor image 520a obtained by extracting the image parts of a range 501, which is set to include the image parts of all persons and another robot present at the conference place, from the image 500 captured by the robot camera 62. The user U visually recognizes the first sub screen 520, and is able to confirm the persons participating in the conference and another robot.

In next step S12, the communication target selection reception unit 36 determines whether the user U has performed a touch operation on any one of image parts 522 to 526 of the persons displayed on the first sub screen 520. Then, when the image part of any person is touched, the communication target selection reception unit 36 sets the person corresponding to the image part that has been touched as a communication target with the user U, and advances the process to step S20.

In this case, the screen display controller 31 may display an enlarged image of the image part of the person that has been set as the communication target, on the first sub screen 520 or the second sub screen 530. FIG. 7 illustrates an example in which the screen display controller 31 displays the image 541 obtained by enlarging the image part of the person that has been set as the communication target, on the communication window 540 of the second sub screen 530. Further, the communication controller 37 may establish communication between a communication terminal used by the person that has been set as the communication target and the operation terminal 100, so that the communication (voice call, chat, or the like) with the user U may be enabled only for the person that has been set as the communication target.

In step S20, the communication controller 37 controls the communication between the user U and the communication target over a voice call, a video call, or a chat in response to an operation on the communication icon 534 by the user U, and advances the process to step S13.

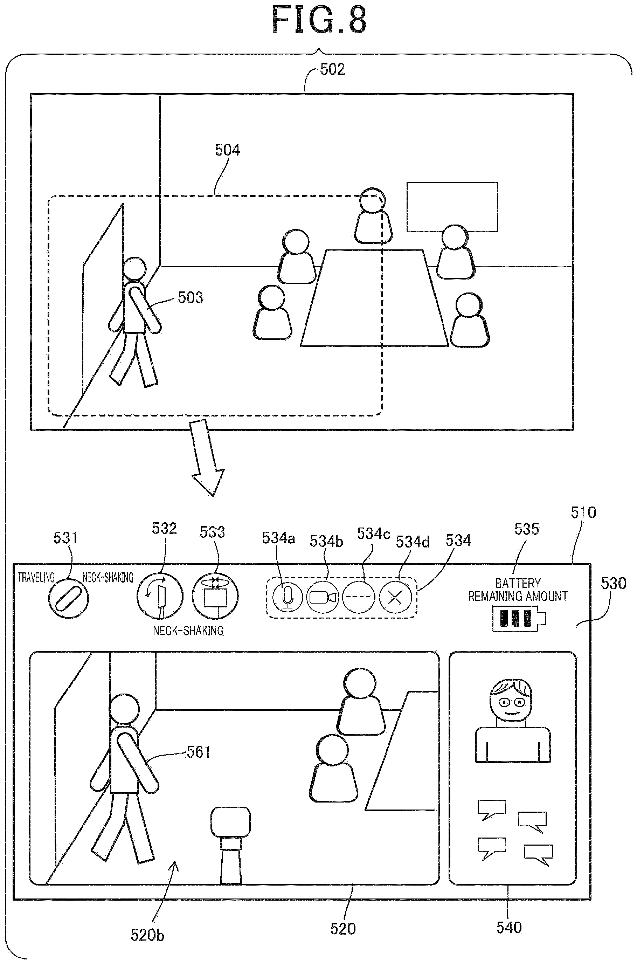

In step S13, the in-motion object recognition unit 39 searches for an object in motion present in the surroundings of the mobile robot 10, and advances the process to step S21 when recognizing the object in motion. In step S21, as illustrated in FIG. 8, the screen display controller 31 extracts an image part of a range 504 including an image part 503 of the object in motion from an image 502 captured by the robot camera 62. Then, a second monitor screen 520b obtained by enlarging the image part of the range 504 is displayed on the first sub screen 520. Accordingly, the user U is able to easily recognize the object in motion approaching the mobile robot 10.

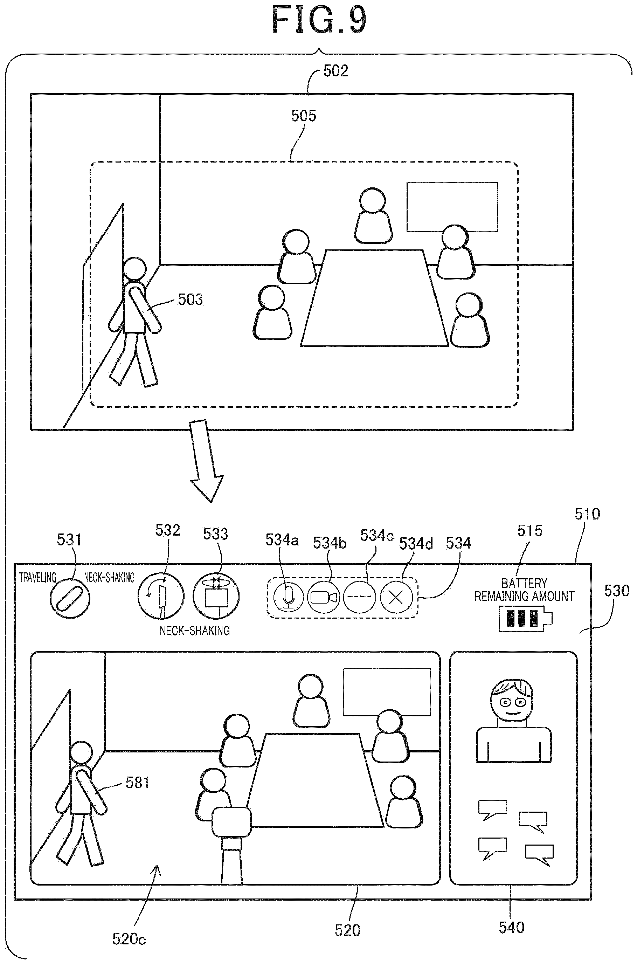

Further, as illustrated in FIG. 9, the screen display controller 31 may extract the image part of a range 505 including the image part 503 of the object in motion and the image parts of all persons participating in the conference from the image 502 captured by the robot camera 62. In this case, the screen display controller 31 displays a monitor image of the range 505 on the first sub screen 520. Accordingly, the user U is able to easily recognize the object in motion approaching the mobile robot 10, while visually recognizing the situations of all the persons participating in the conference.

Here, when the in-motion object recognition unit 39 recognizes a plurality of objects in motion, the screen display controller 31 determines the object in motion to be a target of the process in step S21 in accordance with a following determination condition sequentially from priority order 1, priority order 2, and priority order 3.
Priority order 1: an object in motion that is speaking in the loudest voice
Priority order 2: an object in motion that is moving
Priority order 3: an object in motion standing up and speaking
Note that the above priority orders are merely an example, and for example, the user U may operate the operation terminal 100 to customize the priority orders.

### [6. Display of Operation Screen in Movement Display Mode]

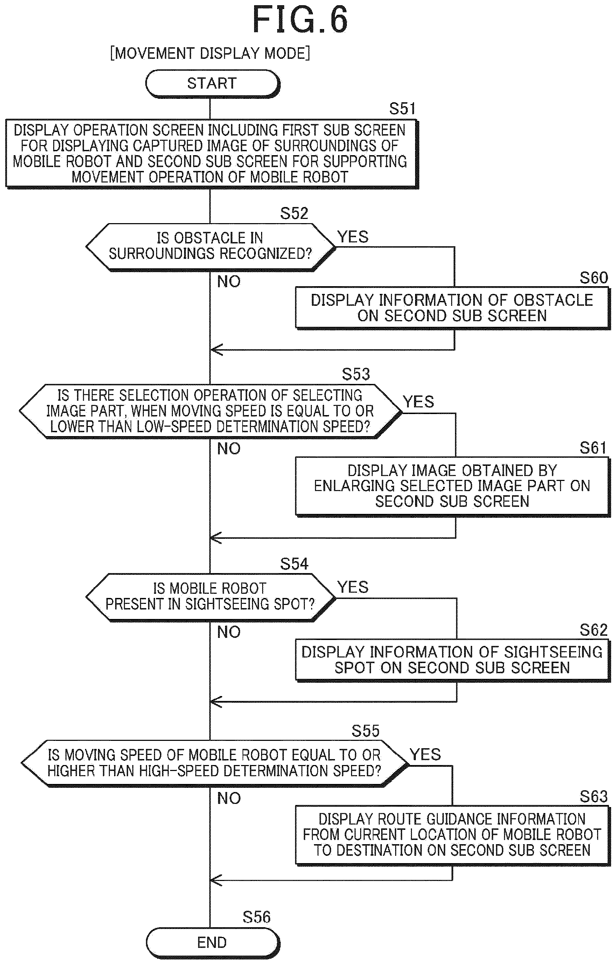

A description will be given with regard to display control of the operation screen in the movement display mode performed by the mobile robot 10 in accordance with the flowchart illustrated in FIG. 6, with reference to the operation screens illustrated in FIGS. 10 to 13.

In step S51 of FIG. 6, as illustrated in FIG. 10, the screen display controller 31 transmits, to the operation terminal 100, the screen data of the operation screen 510 in the movement display mode, and causes the operation screen 510 to be displayed on the terminal display unit 141 of the operation terminal 100. The operation screen 510 includes the first sub screen 520 for displaying a monitor image based on the image captured by the robot camera 62, and the second sub screen 530 for displaying an image for supporting an operation for moving the mobile robot 10.

FIG. 10 illustrates the operation screen 510 in a situation in which the mobile robot 10 is moving inside a building (indoors). In the movement display mode, a forward/backward movement icon for giving an instruction on a forward or backward movement of the mobile robot 10 and a leftward/rightward movement icon 602 for giving an instruction on a leftward or rightward movement are displayed. In addition, a speed meter 603 that displays a moving speed of the mobile robot 10 is displayed. Furthermore, a floor layout diagram 610 of the building in which the mobile robot 10 is moving is displayed.

In subsequent step S52, the obstacle recognition unit 38 searches for an obstacle present in the surroundings of the mobile robot 10. Then, the obstacle recognition unit 38 advances the process to step S60 when recognizing the obstacle, or advances the process to step S53 when not recognizing the obstacle. In step S60, as illustrated in FIG. 6, the screen display controller 31 displays an obstacle notification window 611 for providing notification of the presence of an obstacle on the second sub screen 530. In the obstacle notification window 611, an attention message (here, a message "There is a step ahead"), an image of an obstacle, or the like is displayed.

In next step S53, the screen display controller 31 determines whether a selection operation of selecting the image part displayed on the first sub screen 520 has been performed in a state where the moving speed of the mobile robot 10 is a low-speed determination speed (for example, the moving speed is set to several kilometers per hour). Then, the screen display controller 31 advances the process to step S61, when the selection operation of selecting the image part is performed, or advances the process to step S54, when the selection operation of selecting the image part is not performed.

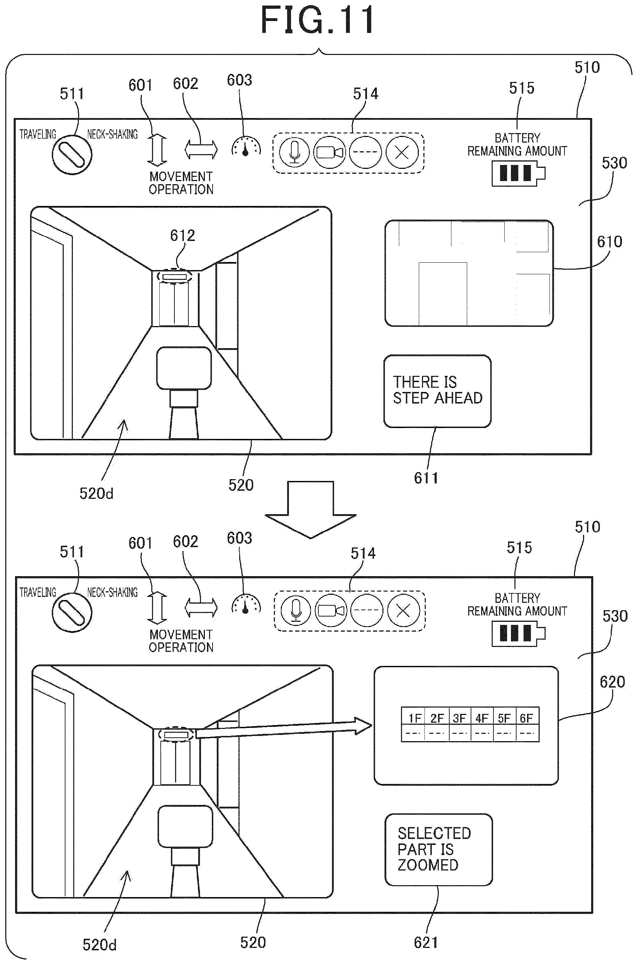

In step S61, as illustrated in FIG. 11, when an image part 612 (here, an image part of a floor guide panel) of the first sub screen 520 is selected, the screen display controller 31 displays, on the second sub screen 530, an enlarged window 620 obtained by enlarging the image part 612. Accordingly, while checking the front of the mobile robot 10 in a wide range on the first sub screen 520, the user U is able to visually recognize details of a target object that the user U desires to confirm on the enlarged window 620 of the second sub screen 530.

In subsequent step S54, the moving situation recognition unit 33 determines whether the mobile robot 10 is present in a sightseeing spot. Then, the moving situation recognition unit 33 advances the process to step S62 in a case where the mobile robot 10 is present in the sightseeing spot, or advances the process to step S55 in a case where the mobile robot 10 is not located in the sightseeing spot.

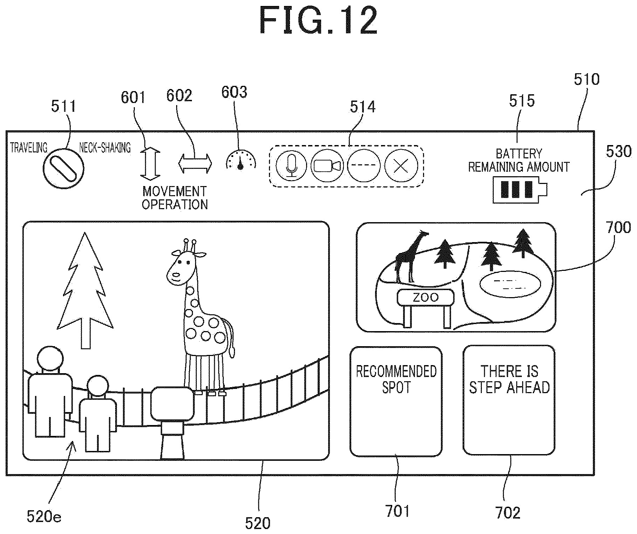

In step S62, as illustrated in FIG. 12, the screen display controller 31 displays the operation screen 510 including the first sub screen 520 for displaying a captured image 520e of the surroundings of the mobile robot 10, and the second sub screen 530 for displaying a map 700 of the sightseeing spot (here, a zoo). Furthermore, the screen display controller 31 displays additional information 701 for displaying additional information at the present location of the mobile robot 10 or in the vicinity of the mobile robot 10.

In addition, when the obstacle recognition unit 38 recognizes an obstacle in the vicinity of the mobile robot 10, the screen display controller 31 also displays an obstacle notification window 702 in the process of step S60.

In subsequent step S55, the moving situation recognition unit 33 determines whether the moving speed of the mobile robot 10 is equal to or higher than a high-speed determination speed (for example, the speed is set to several tens of kilometers per hour). Then, the moving situation recognition unit 33 advances the process to step S63, in a case where the moving speed of the mobile robot 10 is equal to or higher than the high-speed determination speed, or advances the process to step S56, in a case where the moving speed of the mobile robot 10 is lower than the high-speed determination speed.

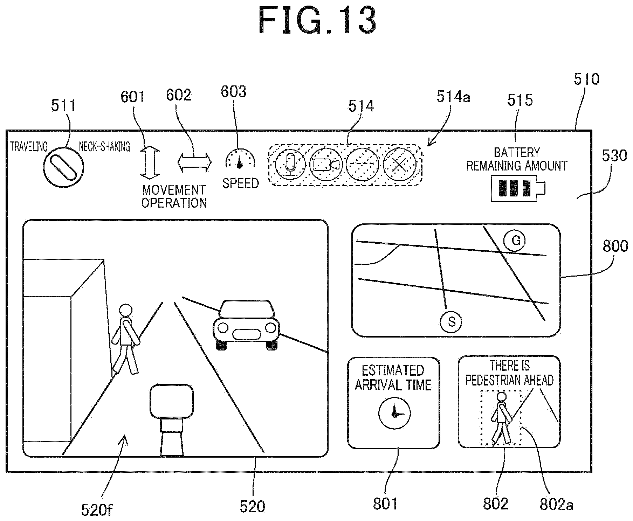

In step S63, as illustrated in FIG. 13, the screen display controller 31 displays the operation screen 510 including the first sub screen 520 for displaying a captured image 520f of the front of the mobile robot 10, and the second sub screen 530 for displaying a route guidance window 800 indicating a route Rt from a current location S of the mobile robot 10 to a destination G on a map of the movement area of the mobile robot 10. The display of the route guidance window 800 enables support for the user U to move the mobile robot 10 to the destination.

Furthermore, the screen display controller 31 displays a predicted arrival time 801 at the destination on the second sub screen 530. In addition, when the obstacle recognition unit 38 recognizes an obstacle in the vicinity of the mobile robot 10, the screen display controller 31 displays an obstacle window 802 on the second sub screen 530 in the process of step S60. In the obstacle window 802, an image part of a pedestrian that has been recognized as an obstacle is displayed in a highlighted manner by a frame 802a.

In addition, while the mobile robot 10 is moving at the high-speed determination speed or higher, an operation for communication is prohibited. Therefore, as illustrated in FIG. 13, the screen display controller 31 displays a communication icon 514 to be darker (in a different display mode) than a frontward/backward movement icon 601 and a leftward/rightward movement icon 602 that can be operated. Accordingly, the user U is made to understand that the operation of the communication icon 514 is disabled. Note that as a different display mode, another display mode, such as displaying an operable icon in color and displaying an inoperable icon in gray scale, may be used.

### [7. Other Embodiments]

In the above embodiment, the display mode switching unit 34 switches between the stop display mode and the movement display mode in response to the operation of the mode changeover switch 531 by the user U in the process of the flowchart illustrated in FIG. 4. As another embodiment, the stop display mode and the movement display mode may be switched in accordance with the moving situation of the mobile robot 10 recognized by the moving situation recognition unit 33. For example, while the mobile robot 10 is in the stop state for a predetermined time or more, the mode may be switched to the stop display mode. In addition, while the mobile robot is moving at a predetermined speed or higher, the mode may be switched to the movement display mode.

In the above embodiment, as illustrated in FIGS. 8 and 9, when an object in motion is recognized by the in-motion object recognition unit 39 in the stop display mode, the display of the first sub screen 520 is switched from the first monitor screen 520a that does not include the image part of the object in motion to the second monitor screens 520b and 520c that include the image part of the object in motion. As another embodiment, the second monitor screens 520b and 520c including the image part of the object in motion may be displayed on the second sub screen 530 without changing the display of the first sub screen 520.

Alternatively, the first sub screen 520 may be switched from the first monitor screen to the second monitor screen in the stop display mode, and the second monitor screen may be displayed on the second sub screen 530 in the movement display mode.

In the above embodiment, when an image part of a person displayed on the first sub screen 520 is subjected to a touch operation, the communication target selection reception unit 36 sets such a person corresponding to the image part subjected to the touch operation as a communication target. As another embodiment, identification information (a name, an ID, and the like) of a person or a robot corresponding to an image part displayed on the first sub screen 520 may be displayed in a list on the first sub screen 520, so that a communication target can be selected by a touch operation on the identification information displayed in the list.

In the above embodiment, the display of the operation screen 510 is controlled in the process of the screen display controller 31 to the user face image display controller 45 by the robot processor 30 of the mobile robot 10. As another embodiment, all or a part of the screen display controller 31 to the user face image display controller 45 may be configured with the terminal processor 120 of the operation terminal 100. In this case, the terminal processor 120 controls the operation screen 510 displayed on the terminal display unit 141, based on the image captured by the robot camera 62, the data of the sound detected by the robot microphone 64, the data of the object detected by the LiDAR 65, and the like, which are transmitted from the mobile robot 10.

In addition, all or a part of the screen display controller 31 to the user face image display controller 45 may be configured with the robot management server 220. In this case, the robot management server 220 communicates with the mobile robot 10 and the operation terminal 100, receives the image captured by the robot camera 62, operation data on the operation terminal 100, and the like, and controls display of the terminal display unit 141 of the operation terminal 100.

In the above embodiment, the current location recognition unit 32 may recognize that the mobile robot 10 is located inside a room, based on the map DB 52 or the building DB 53. Then, in a state where the current location recognition unit 32 recognizes that the mobile robot 10 is located inside the room, when an object entering the room is detected, based on an image captured by the robot camera 62, an object detection signal detected by the LiDAR 65, a sound detected by the robot microphone 64, and the like, the in-motion object recognition unit 39 may recognize the object as an object in motion.

Note that FIGS. 2 and 3 are schematic diagrams illustrating the configurations of the mobile robot 10 and the operation terminal 100 in a separated manner in accordance with a main processing content in order to facilitate understanding of the present invention. The configurations of the mobile robot 10 and the operation terminal 100 may be made in another separated manner. In addition, the process of each constituent element may be performed by one hardware unit, or may be performed by a plurality of hardware units. In addition, the process of each constituent element illustrated in FIGS. 4 to 6 may be performed by one program, or may be performed by a plurality of programs.

The configuration in which the moving situation recognition unit 33 recognizes the moving speed of the mobile robot 10 corresponds to a moving speed recognition unit in the present disclosure. The configuration in which the current location recognition unit 32 recognizes whether the mobile robot is present indoors or outdoors corresponds to an indoor and outdoor location recognition unit in the present disclosure. The configuration in which the screen display controller 31 causes the robot communication unit 60 to transmit the data of the operation screen to the operation terminal 100 corresponds to a screen data transmission unit in the present disclosure. The configuration in which the terminal processor 120 causes the terminal communication unit 140 to receive the monitor image information based on the captured image of the surroundings of the mobile robot 10 transmitted from the mobile robot 10 corresponds to a monitor image information acquisition unit in the present disclosure.

### [8. Configuration Supported by Above Embodiments]

The above embodiments are specific examples of the claimed configurations.

### Reference Signs List

- 1: remote operation system
- 10: mobile robot
- 14: traveling unit
- 20: robot controller
- 30: robot processor
- 31: screen display controller
- 32: current location recognition unit
- 33: moving situation recognition unit
- 34: display mode switching unit
- 35: surrounding target object recognition unit
- 36: communication target selection reception unit
- 37: communication controller
- 38: obstacle recognition unit
- 39: in-motion object recognition unit
- 40: destination recognition unit
- 41: movement route recognition unit
- 42: display image range setting unit
- 43: camera image-capturing range controller
- 44: horizontal direction image acquisition unit
- 45: user face image display controller
- 61: robot display unit
- 62: robot camera
- 63: robot speaker
- 64: robot microphone
- 65: LiDAR
- 66: GNSS sensor
- 67: speed sensor
- 68: inclination sensor
- 100: operation terminal
- 110: terminal controller
- 120: terminal processor
- 121: robot operation screen controller
- 122: robot operation instruction controller
- 141: terminal display unit
- 142: terminal camera
- 143: terminal microphone
- 144: terminal speaker

## Claims

1. A remote operation system (1) comprising: a mobile robot (10); and an operation terminal (100) configured to communicate with the mobile robot with each other,
the mobile robot including a camera (62) configured to capture an image of surroundings of the mobile robot, and transmitting, to the operation terminal, monitor image information based on a captured image by the camera,
the operation terminal including a terminal display unit (141), receiving the monitor image information, and displaying, on the terminal display unit, an operation screen including a monitor image based on the captured image, wherein
the remote operation system comprises a screen display controller (31) configured to display the operation screen on the terminal display unit, the operation screen including a first sub screen (520) for displaying the monitor image and a second sub screen (530) different from the first sub screen, and configured to change a display content of the second sub screen in accordance with a predetermined display mode, wherein
a stop display mode corresponding to a situation in which the mobile robot is stopped is set as the display mode,
the remote operation system further comprises:
a surrounding target object recognition unit (35) configured to recognize a surrounding target object that is either a person or another robot present in the surroundings of the mobile robot; and
a communication target selection reception unit (36) configured to receive a selection operation for the surrounding target object, and the remote operation system being **characterized in that**
in the stop display mode, the screen display controller displays, on the second sub screen, an operation unit for supporting communication with the surrounding target object, selection of which has been received by the communication target selection reception unit, wherein
the communication target selection reception unit receives the selection of the surrounding target object in response to the selection operation for an image part of the surrounding target object displayed on the first sub screen,
the screen display controller displays, on either the first sub screen or the second sub screen, an image obtained by enlarging the image part of the surrounding target object, the selection of which has been received by the communication target selection reception unit, and
the remote operation system further comprises a communication controller (37) configured to enable the communication with only the surrounding target object, the selection of which has been received by the communication target selection reception unit.

2. The remote operation system according to claim 1, wherein
in the stop display mode, the screen display controller displays, on the second sub screen, a list of identification information of a plurality of the surrounding target objects, and
the communication target selection reception unit receives the selection of the surrounding target object in response to the selection operation for the list of the identification information that has been displayed.

3. The remote operation system according to claim 1 or 2, wherein
the surrounding target object recognition unit recognizes either the surrounding target object registered beforehand or the surrounding target object present within a predetermined distance from the mobile robot, from the surrounding target object present in the surroundings of the mobile robot.

4. The remote operation system according to one of claims 1 to 3, wherein
a movement display mode corresponding to a situation in which the mobile robot is moving is set as the display mode, and
in the movement display mode, the screen display controller displays, on the second sub screen, operation support information for supporting an operation for moving the mobile robot.

5. The remote operation system according to claim 4, wherein
in the movement display mode, the screen display controller displays, on the first sub screen, an image part of a first image-capturing range in the captured image by the camera, and also displays, on the second sub screen, an image part of a second image-capturing range different from the first image-capturing range as the operation support information.

6. The remote operation system according to claim 5, further comprising
an obstacle recognition unit (38) configured to recognize an obstacle present in the surroundings of the mobile robot, wherein
in the movement display mode, the screen display controller displays, on the second sub screen, the image part of the second image-capturing range including the obstacle by highlighting an image part of the obstacle.

7. The remote operation system according to one of claims 4 to 6, wherein
in the movement display mode, the screen display controller displays, on the second sub screen, a map of a movement area of the mobile robot as the operation support information.

8. The remote operation system according to claim 7, wherein
in the movement display mode, the screen display controller displays, on the second sub screen, area additional information as the operation support information, the area additional information being information regarding at least one of a sightseeing spot present in the movement area, a facility present in the movement area, and an event performed in the movement area.

9. The remote operation system according to claim 8, wherein
when the selection operation for a specific location displayed on the map is performed, the screen display controller displays, on the second sub screen, the area additional information associated with the specific location as the operation support information.

10. The remote operation system according to claim 8 or claim 9, further comprising
a current location recognition unit (32) configured to recognize a current location of the mobile robot, wherein
in the movement display mode, when the current location recognition unit recognizes that the mobile robot is located in a registered area registered as a sightseeing area, the screen display controller displays, on the second sub screen, the area additional information associated with the registered area as the operation support information.

11. The remote operation system according to one of claims 8 to 10, further comprising
a moving speed recognition unit configured to recognize a moving speed of the mobile robot, wherein
when the moving speed of the mobile robot is equal to or lower than a predetermined low-speed determination speed, the screen display controller displays, on the second sub screen, the area additional information as the operation support information.

12. The remote operation system according to one of claims 4 to 11, further comprising:
a current location recognition unit configured to recognize a current location of the mobile robot;
a destination recognition unit configured to recognize a destination of the mobile robot; and
a movement route recognition unit configured to recognize a movement route from the current location to the destination, wherein
in the movement display mode, the screen display controller displays, on the second sub screen, navigation information for navigating a movement along the movement route from the current location to the destination as the operation support information.

13. The remote operation system according to claim 12, further comprising
a moving speed recognition unit (33) configured to recognize a moving speed of the mobile robot, wherein
when the moving speed of the mobile robot is equal to or higher than a predetermined high-speed determination speed, the screen display controller displays the navigation information on the second sub screen.

14. The remote operation system according to one of claims 4 to 13, wherein
the mobile robot includes a robot display unit (61), and
the remote operation system further comprises a user face image display controller (45) configured to, in the movement display mode, prohibit a face image of a user of the operation terminal from being displayed on the robot display unit, or configured to switch a display on the robot display unit to a display of a predetermined substitute icon.

15. The remote operation system according to one of claims 1 to 14, further comprising
a display mode switching unit (34) configured to switch the display mode in response to an operation on the operation terminal by a user.

16. The remote operation system according to one of claims 1 to 14, further comprising:
an indoor and outdoor location recognition unit (32) configured to recognize whether the mobile robot is present indoors or outdoors; and
a display mode switching unit (34) configured to switch the display mode in accordance with whether the mobile robot is present indoors or outdoors.

17. The remote operation system according to one of claims 1 to 16, further comprising
a display layout change unit (46) configured to change a display layout of the operation screen in response to an operation on the operation terminal by a user.

18. The remote operation system according to one of claims 1 to 17, wherein
the terminal display unit is a touch panel, and
the screen display controller displays a first operation icon, for which a touch operation is disabled in accordance with the predetermined display mode, in a display mode different from a display mode of a second operation icon for which the touch operation is enabled, out of operation icons displayed on the operation screen.

## Patentansprüche

1. Fernbetriebssystem (1), umfassend:
einen mobilen Roboter (10); und
ein Betriebsterminal (100), welches dazu eingerichtet ist, gegenseitig mit dem mobilen Roboter zu kommunizieren,
wobei der mobile Roboter eine Kamera (62) umfasst, welche dazu eingerichtet ist, ein Umgebungsbild des mobilen Roboters aufzunehmen, und auf Grundlage eines von der Kamera aufgenommenen Bildes Monitorbildinformationen an das Betriebsterminal übertragt,
wobei das Betriebsterminal eine Terminalanzeigeeinheit (141) umfasst, die Monitorbildinformationen empfängt und auf Grundlage des aufgenommenen Bildes einen Betriebsbildschirm auf der Terminalanzeigeeinheit anzeigt,
wobei das Fernbetriebssystem eine Bildschirmanzeigesteuerungseinheit (31) umfasst, welche dazu eingerichtet ist, den Betriebsbildschirm auf der Terminalanzeigeeinheit anzuzeigen, wobei der Betriebsbildschirm einen ersten Teilbildschirm (520) zum Anzeigen des Monitorbildes und einen zweiten Teilbildschirm (530) umfasst, welcher von dem ersten Teilbildschirm verschieden ist, und dazu eingerichtet ist, einen Anzeigeinhalt des zweiten Teilbildschirms in Übereinstimmung mit einem vorbestimmten Anzeigemodus zu ändern,
wobei ein Stopp-Anzeigemodus, welcher einer Situation entspricht, in welcher der mobile Roboter gestoppt ist, als der Anzeigemodus festgelegt ist,
wobei das Fernbetriebssystem ferner umfasst:
eine umgebendes Zielobjekt-Erkennungseinheit (35), welche dazu eingerichtet ist, ein umgebendes Zielobjekt zu erkennen, welches entweder eine Person oder ein weiterer Roboter ist, welche/welcher in der Umgebung des mobilen Roboters präsent ist; und
eine Kommunikation-Zielauswahl-Empfangseinheit (36), welche dazu eingerichtet ist, einen Auswahlbetrieb für das umgebende Zielobjekt zu empfangen,
und wobei das Fernbetriebssystem **dadurch gekennzeichnet ist, dass** in dem Stopp-Anzeigemodus die Bildschirmanzeigesteuerungseinheit auf dem zweiten Teilbildschirm eine Betriebseinheit zum Unterstützen einer Kommunikation mit dem umgebenden Zielobjekt anzeigt, dessen Auswahl von der Kommunikation-Zielauswahl-Empfangseinheit empfangen worden ist,
wobei die Kommunikation-Zielauswahl-Empfangseinheit die Auswahl des umgebenden Zielobjekts als Reaktion auf den Auswahlbetrieb für einen Bildteil des umgebenden Zielobjekts empfängt, welcher auf dem ersten Teilbildschirm angezeigt ist,
wobei die Bildschirmanzeigesteuerungseinheit auf entweder dem ersten Teilbildschirm oder dem zweiten Teilbildschirm ein Bild anzeigt, welches durch Vergrößern des Bildteils des umgebenden Zielobjekts erhalten worden ist, dessen Auswahl von der Kommunikation-Zielauswahl-Empfangseinheit empfangen worden ist, und
wobei das Fernbetriebssystem ferner eine Kommunikationssteuerungseinheit (37) umfasst, welche dazu eingerichtet ist, die Kommunikation lediglich mit dem umgebenden Zielobjekt zu ermöglichen, dessen Auswahl von der Kommunikation-Zielauswahl-Empfangseinheit empfangen worden ist.

2. Fernbetriebssystem nach Anspruch 1, wobei
in dem Stopp-Anzeigemodus die Bildschirmanzeigesteuerungseinheit auf dem zweiten Teilbildschirm eine Liste von Identifizierungsinformationen einer Mehrzahl der umgebenden Zielobjekte anzeigt, und
die Kommunikation-Zielauswahl-Empfangseinheit die Auswahl des umgebenden Zielobjekts als Reaktion auf den Auswahlbetrieb für die Liste der Identifizierungsinformationen empfängt, welche angezeigt worden sind.

3. Fernbetriebssystem nach Anspruch 1 oder 2, wobei
die umgebendes Zielobjekt-Erkennungseinheit entweder das zuvor registrierte umgebende Zielobjekt oder das umgebende Zielobjekt, welches innerhalb einer vorbestimmten Distanz von dem mobilen Roboter präsent ist, von dem umgebenden Zielobjekt erkennt, welches in der Umgebung des mobilen Roboters präsent ist.

4. Fernbetriebssystem nach einem der Ansprüche 1 bis 3, wobei
ein Bewegungsanzeigemodus, welcher einer Situation entspricht, in welcher sich der mobile Roboter bewegt, als der Anzeigemodus festgelegt ist, und
in dem Bewegungsanzeigemodus die Bildschirmanzeigesteuerungseinheit auf dem zweiten Teilbildschirm Betriebsunterstützungsinformationen zum Unterstützen eines Betriebs zum Bewegen des mobilen Roboters anzeigt.

5. Fernbetriebssystem nach Anspruch 4, wobei
in dem Bewegungsanzeigemodus die Bildschirmanzeigesteuerungseinheit auf dem ersten Teilbildschirm einen Bildteil eines ersten Bildaufnahmebereichs in dem durch die Kamera aufgenommenen Bild anzeigt und außerdem auf dem zweiten Teilbildschirm einen Bildteil eines zweiten Bildaufnahmebereichs, welcher von dem ersten Bildaufnahmebereich verschieden ist, als die Betriebsunterstützungsinformationen anzeigt.

6. Fernbetriebssystem nach Anspruch 5, ferner umfassend:
eine Hindernis-Erkennungseinheit (38), welche dazu eingerichtet ist, ein Hindernis zu erkennen, welches in der Umgebung des mobilen Roboters präsent ist,
wobei in dem Bewegungsanzeigemodus die Bildschirmanzeigesteuerungseinheit auf dem zweiten Teilbildschirm den Bildteil des zweiten Bildaufnahmebereichs anzeigt, umfassend das Hindernis, indem ein Bildteil des Hindernisses hervorgehoben wird.

7. Fernbetriebssystem nach einem der Ansprüche 4 bis 6, wobei
in dem Bewegungsanzeigemodus die Bildschirmanzeigesteuerungseinheit auf dem zweiten Teilbildschirm eine Karte eines Bewegungsbereichs des mobilen Roboters als die Betriebsunterstützungsinformationen anzeigt.

8. Fernbetriebssystem nach Anspruch 7, wobei
in dem Bewegungsanzeigemodus die Bildschirmanzeigesteuerungseinheit auf dem zweiten Teilbildschirm zusätzliche Bereichsinformationen als die Betriebsunterstützungsinformationen anzeigt, wobei die zusätzlichen Bereichsinformationen Informationen bezüglich wenigstens eines aus einer Besichtigungsstelle, welche in dem Bewegungsbereich präsent ist, einer Einrichtung, welche in dem Bewegungsbereich präsent ist, und einem Event sind, welches in dem Bewegungsbereich durchgeführt wird.

9. Fernbetriebssystem nach Anspruch 8, wobei,
wenn der Auswahlbetrieb für eine spezifische Position durchgeführt wird, welche auf der Karte angezeigt ist, zeigt die Bildschirmanzeigesteuerungseinheit auf dem zweiten Teilbildschirm die zusätzlichen Bereichsinformationen, welche mit der spezifischen Position assoziiert sind, als die Betriebsunterstützungsinformationen an.

10. Fernbetriebssystem nach Anspruch 8 oder Anspruch 9, ferner umfassend:
eine derzeitige Position-Erkennungseinheit (32), welche dazu eingerichtet ist, eine derzeitige Position des mobilen Roboters zu erkennen,
wobei in dem Bewegungsanzeigemodus, wenn die derzeitige Position-Erkennungseinheit erkennt, dass der mobile Roboter in einem registrierten Bereich positioniert ist, welcher als ein Besichtigungsbereich registriert ist, die Bildschirmanzeigesteuerungseinheit auf dem zweiten Teilbildschirm die zusätzlichen Bereichsinformationen, welche mit dem registrierten Bereich assoziiert sind, als die Betriebsunterstützungsinformationen anzeigt.

11. Fernbetriebssystem nach einem der Ansprüche 8 bis 10, ferner umfassend:
eine Bewegungsgeschwindigkeit-Erkennungseinheit, welche dazu eingerichtet ist, eine Bewegungsgeschwindigkeit des mobilen Roboters zu erkennen,
wobei, wenn die Bewegungsgeschwindigkeit des mobilen Roboters gleich wie oder niedriger als eine vorbestimmte Niedriggeschwindigkeit-Bestimmungsgeschwindigkeit ist, die Bildschirmanzeigesteuerungseinheit auf dem zweiten Teilbildschirm die zusätzlichen Bereichsinformationen als die Betriebsunterstützungsinformationen anzeigt.

12. Fernbetriebssystem nach einem der Ansprüche 4 bis 11, ferner umfassend:
eine derzeitige Position-Erkennungseinheit, welche dazu eingerichtet ist, eine derzeitige Position des mobilen Roboters zu erkennen;
eine Zielort-Erkennungseinheit, welche dazu eingerichtet ist, einen Zielort des mobilen Roboters zu erkennen; und
eine Bewegungsroute-Erkennungseinheit, welche dazu eingerichtet ist, eine Bewegungsroute von der derzeitigen Position zu dem Zielort zu erkennen,
wobei in dem Bewegungsanzeigemodus die Bildschirmanzeigesteuerungseinheit auf dem zweiten Teilbildschirm Navigationsinformationen zum Navigieren einer Bewegung entlang der Bewegungsroute von der derzeitigen Position zu dem Zielort als die Betriebsunterstützungsinformationen anzeigt.

13. Fernbetriebssystem nach Anspruch 12, ferner umfassend:
eine Bewegungsgeschwindigkeit-Erkennungseinheit (33), welche dazu eingerichtet ist, eine Bewegungsgeschwindigkeit des mobilen Roboters zu erkennen,
wobei, wenn die Bewegungsgeschwindigkeit des mobilen Roboters gleich wie oder höher als eine vorbestimmte Hochgeschwindigkeit-Bestimmungsgeschwindigkeit ist, die Bildschirmanzeigesteuerungseinheit die Navigationsinformationen auf dem zweiten Teilbildschirm anzeigt.

14. Fernbetriebssystem nach einem der Ansprüche 4 bis 13, wobei
der mobile Roboter eine Roboteranzeigeeinheit (61) umfasst, und
das Fernbetriebssystem ferner eine Benutzergesicht-Bildanzeigesteuerungseinheit umfasst, welche dazu eingerichtet ist, es in dem Bewegungsanzeigemodus zu verbieten, ein Gesichtsbild eines Benutzers des Betriebsterminals auf der Roboteranzeigeeinheit anzuzeigen, oder dazu eingerichtet ist, eine Anzeige an der Roboteranzeige zu einer Anzeige eines vorbestimmten Ersatzsymbols zu wechseln.

15. Fernbetriebssystem nach einem der Ansprüche 1 bis 14, ferner umfassend:
eine Anzeigemodus-Wechseleinheit (34), welche dazu eingerichtet ist, den Anzeigemodus als Reaktion auf einen Betrieb an dem Betriebsterminal durch einen Benutzer zu wechseln.

16. Fernbetriebssystem nach einem der Ansprüche 1 bis 14, ferner umfassend:
eine Innen- und Außenposition-Erkennungseinheit (32), welche dazu eingerichtet ist, zu erkennen, ob der mobile Roboter in einem Innenraum oder im Freien präsent ist; und
eine Anzeigemodus-Wechseleinheit (34), welche dazu eingerichtet ist, den Anzeigemodus in Übereinstimmung mit der Präsenz des mobilen Roboters in einem Innenraum oder im Freien zu wechseln.

17. Fernbetriebssystem nach einem der Ansprüche 1 bis 16, ferner umfassend:
eine Anzeigegestaltung-Änderungseinheit (46), welche dazu eingerichtet ist, eine Anzeigegestaltung des Betriebsbildschirms als Reaktion auf einen Betrieb an dem Betriebsterminal durch einen Benutzer zu ändern.

18. Fernbetriebssystem nach einem der Ansprüche 1 bis 17, wobei
die Terminalanzeigeeinheit ein Touch-Paneel ist, und
die Bildschirmanzeigesteuerungseinheit ein erstes Betriebssymbol, für welches ein Touch-Betrieb in Übereinstimmung mit dem vorbestimmten Anzeigemodus gesperrt ist, in einem Anzeigemodus, welcher von einem Anzeigemodus eines zweites Betriebssymbols verschieden ist, für welches der Touch-Betrieb freigeschalten ist, aus Betriebssymbolen anzeigt, welche auf dem Betriebsbildschirm angezeigt sind.

## Revendications

1. Système de téléopération (1) comprenant : un robot mobile (10) ; et un terminal d'opération (100) configuré pour communiquer de façon mutuelle avec le robot mobile ;
le robot mobile comportant une caméra (62) configurée pour capturer une image de l'environnement du robot mobile, et transmettre, au terminal d'opération, des informations d'image de surveillance basées sur une image capturée par la caméra,
le terminal d'opération comportant une unité d'affichage de terminal (141), recevant les informations d'image de surveillance, et affichant, sur l'unité d'affichage de terminal, un écran d'opération comportant une image de surveillance basée sur l'image capturée, dans lequel
le système de téléopération comprend un dispositif de commande d'affichage d'écran (31) configuré pour afficher l'écran d'opération sur l'unité d'affichage de terminal, l'écran d'opération comportant un premier sous-écran (520) destiné à afficher l'image de surveillance et un deuxième sous-écran (530) différent du premier sous-écran, et configuré pour modifier un contenu d'affichage du deuxième sous-écran en fonction d'un mode d'affichage prédéterminé, dans lequel
un mode d'affichage d'arrêt correspondant à une situation dans laquelle le robot mobile est arrêté est défini en tant que mode d'affichage,
le système de téléopération comprend en outre :
une unité de reconnaissance d'objet cible environnant (35) configurée pour reconnaître un objet cible environnant qui est soit une personne soit un autre robot présent(e) dans l'environnement du robot mobile ; et
une unité de réception de sélection de cible de communication (36) configurée pour recevoir une opération de sélection pour l'objet cible environnant, et le système de téléopération étant **caractérisé en ce que**
dans le mode d'affichage d'arrêt, le dispositif de commande d'affichage d'écran affiche, sur le deuxième sous-écran, une unité d'opération destinée à prendre en charge une communication avec l'objet cible environnant, dont une sélection a été reçue par l'unité de réception de sélection de cible de communication, dans lequel
l'unité de réception de sélection de cible de communication reçoit la sélection de l'objet cible environnant en réponse à l'opération de sélection pour une partie d'image de l'objet cible environnant affichée sur le premier sous-écran,
le dispositif de commande d'affichage d'écran affiche, soit sur le premier sous-écran, soit sur le deuxième sous-écran, une image obtenue en agrandissant la partie d'image de l'objet cible environnant, dont la sélection a été reçue par l'unité de réception de sélection de cible de communication, et
le système de téléopération comprend en outre un dispositif de commande de communication (37) configuré pour activer la communication avec seulement l'objet cible environnant, dont la sélection a été reçue par l'unité de réception de sélection de cible de communication.

2. Système de téléopération selon la revendication 1, dans lequel
dans le mode d'affichage d'arrêt, le dispositif de commande d'affichage d'écran affiche, sur le deuxième sous-écran, une liste d'informations d'identification d'une pluralité des objets cibles environnants, et
l'unité de réception de sélection de cible de communication reçoit la sélection de l'objet cible environnant en réponse à l'opération de sélection pour la liste des informations d'identification qui ont été affichées.

3. Système de téléopération selon la revendication 1 ou 2, dans lequel
l'unité de reconnaissance d'objet cible environnant reconnaît soit l'objet cible environnant enregistré à l'avance, soit l'objet cible environnant présent sous une distance prédéterminée à partir du robot mobile, à partir de l'objet cible environnant présent dans l'environnement du robot mobile.

4. Système de téléopération selon l'une des revendications 1 à 3, dans lequel
un mode d'affichage de mouvement correspondant à une situation dans laquelle le robot mobile se déplace est défini en tant que mode d'affichage, et
dans le mode d'affichage de mouvement, le dispositif de commande d'affichage d'écran affiche, sur le deuxième sous-écran, des informations de prise en charge d'opération destinées à prendre en charge une opération pour le mouvement du robot mobile.

5. Système de téléopération selon la revendication 4, dans lequel
dans le mode d'affichage de mouvement, le dispositif de commande d'affichage d'écran affiche, sur le premier sous-écran, une partie d'image d'une première plage de capture d'image dans l'image capturée par la caméra, et affiche également, sur le deuxième sous-écran, une partie d'image d'une deuxième plage de capture d'image différente de la première plage de capture d'image en tant qu'informations de prise en charge d'opération.

6. Système de téléopération selon la revendication 5, comprenant en outre
une unité de reconnaissance d'obstacle (38) configurée pour reconnaître un obstacle présent dans l'environnement du robot mobile, dans lequel
dans le mode d'affichage de mouvement, le dispositif de commande d'affichage d'écran affiche, sur le deuxième sous-écran, la partie d'image de la deuxième plage de capture d'image comportant l'obstacle en mettant en lumière une partie d'image de l'obstacle.

7. Système de téléopération selon l'une des revendications 4 à 6, dans lequel
dans le mode d'affichage de mouvement, le dispositif de commande d'affichage d'écran affiche, sur le deuxième sous-écran, une carte d'une zone de mouvement du robot mobile en tant qu'informations de prise en charge d'opération.

8. Système de téléopération selon la revendication 7, dans lequel
dans le mode d'affichage de mouvement, le dispositif de commande d'affichage d'écran affiche, sur le deuxième sous-écran, des informations supplémentaires de zone en tant qu'informations de prise en charge d'opération, les informations supplémentaires de zone étant des informations concernant au moins l'un(e) d'un lieu de tourisme présent dans la zone de mouvement, d'une installation présente dans la zone de mouvement, et d'un événement réalisé dans la zone de mouvement.

9. Système de téléopération selon la revendication 8, dans lequel
lorsque l'opération de sélection pour un emplacement spécifique affiché sur la carte est réalisée, le dispositif de commande d'affichage d'écran affiche, sur le deuxième sous-écran, les informations supplémentaires de zone associées à l'emplacement spécifique en tant qu'informations de prise en charge d'opération.

10. Système de téléopération selon la revendication 8 ou la revendication 9, comprenant en outre
une unité de reconnaissance d'emplacement actuel (32) configurée pour reconnaître un emplacement actuel du robot mobile, dans lequel
dans le mode d'affichage de mouvement, lorsque l'unité de reconnaissance d'emplacement actuel reconnaît que le robot mobile est situé dans une zone enregistrée enregistrée en tant que zone de tourisme, le dispositif de commande d'affichage d'écran affiche, sur le deuxième sous-écran, les informations supplémentaires de zone associées à la zone enregistrée en tant qu'informations de prise en charge d'opération.

11. Système de téléopération selon l'une des revendications 8 à 10, comprenant en outre
une unité de reconnaissance de vitesse de mouvement configurée pour reconnaître une vitesse de mouvement du robot mobile, dans lequel
lorsque la vitesse de mouvement du robot mobile est égale ou inférieure à une vitesse de détermination de faible vitesse prédéterminée, le dispositif de commande d'affichage d'écran affiche, sur le deuxième sous-écran, les informations supplémentaires de zone en tant qu'informations de prise en charge d'opération.

12. Système de téléopération selon l'une des revendications 4 à 11, comprenant en outre :
une unité de reconnaissance d'emplacement actuel configurée pour reconnaître un emplacement actuel du robot mobile ;
une unité de reconnaissance de destination configurée pour reconnaître une destination du robot mobile ; et
une unité de reconnaissance d'itinéraire de mouvement configurée pour reconnaître un itinéraire de mouvement de l'emplacement actuel à la destination, dans lequel
dans le mode d'affichage de mouvement, le dispositif de commande d'affichage d'écran affiche, sur le deuxième sous-écran, des informations de navigation pour la navigation d'un mouvement le long de l'itinéraire de mouvement de l'emplacement actuel à la destination en tant qu'informations de prise en charge d'opération.

13. Système de téléopération selon la revendication 12, comprenant en outre
une unité de reconnaissance de vitesse de mouvement (33) configurée pour reconnaître une vitesse de mouvement du robot mobile, dans lequel
lorsque la vitesse de mouvement du robot mobile est égale ou supérieure à une vitesse de détermination de haute vitesse prédéterminée, le dispositif de commande d'affichage d'écran affiche les informations de navigation sur le deuxième sous-écran.

14. Système de téléopération selon l'une des revendications 4 à 13, dans lequel
le robot mobile comporte une unité d'affichage de robot (61), et
le système de téléopération comprend en outre un dispositif de commande d'affichage d'image de visage d'utilisateur (45) configuré pour, dans le mode d'affichage de mouvement, interdire l'affichage d'une image de visage d'un utilisateur du terminal d'opération sur l'unité d'affichage de robot, ou configuré pour commuter un affichage sur l'unité d'affichage de robot vers un affichage d'une icône de substitution prédéterminée.

15. Système de téléopération selon l'une des revendications 1 à 14, comprenant en outre
une unité de commutation de mode d'affichage (34) configurée pour commuter le mode d'affichage en réponse à une opération sur le terminal d'opération par un utilisateur.

16. Système de téléopération selon l'une des revendications 1 à 14, comprenant en outre :
une unité de reconnaissance d'emplacement intérieur et extérieur (32) configurée pour reconnaître si oui ou non le robot mobile est présent à l'intérieur ou à l'extérieur; et
une unité de commutation de mode d'affichage (34) configurée pour commuter le mode d'affichage en fonction de si le robot mobile est présent à l'intérieur ou à l'extérieur.

17. Système de téléopération selon l'une des revendications 1 à 16, comprenant en outre
une unité de modification de configuration d'affichage (46) configurée pour modifier une configuration d'affichage de l'écran d'opération en réponse à une opération sur le terminal d'opération par un utilisateur.

18. Système de téléopération selon l'une des revendications 1 à 17, dans lequel
l'unité d'affichage de terminal est un panneau tactile, et
le dispositif de commande d'affichage d'écran affiche une première icône d'opération, pour laquelle une opération tactile est désactivée en fonction du mode d'affichage prédéterminé, dans un mode d'affichage différent d'un mode d'affichage d'une deuxième icône d'opération pour laquelle l'opération tactile est activée, parmi des icônes d'opération affichées sur l'écran d'opération.
